# EUROPÄISCHE PATENTANMELDUNG

(11) **EP 3 993 137 A1**
(43) Veröffentlichungstag der Anmeldung: **04.05.2022**
(21) Anmeldenummer: 21205039.7
(22) Anmeldetag: 27.10.2021
(51) Int. Cl.: H01M 10/613, H01M 50/211, H01M 50/502

(54) **BATTERIEMODUL**

(30) Priorität: 30.10.2020 DE 102020125856
(71) Anmelder: VOLKSWAGEN AG, 38440 Wolfsburg (DE)
(72) Erfinder: Szardenings, Anna, 38114 Braunschweig (DE)
(74) Vertreter: Rössler, Matthias

(57) **Zusammenfassung**

Batteriemodul (1), zumindest umfassend eine Mehrzahl von Pouchzellen (2, 3), wobei jede Pouchzelle (2, 3) ein Gehäuse (4) mit zwei einander gegenüberliegenden größten Seitenflächen (5) aufweist; wobei die Pouchzellen (2, 3) in dem Batteriemodul (1) mit aufeinanderliegenden Seitenflächen (5) gestapelt angeordnet sind; wobei zumindest ein Teil der Ableiter (6, 7) von benachbart zueinander angeordneten Pouchzellen (2, 3) über einen Zellverbinder (8) elektrisch leitend miteinander verbunden sind; wobei sich der Zellverbinder (8) ausgehend von, an einer ersten Stirnseite (9) des Gehäuses (4) angeordneten, Verbindungen (10) mit den Ableitern (6, 7), entlang der ersten Stirnseite (9) hin zu einer Wärmesenke (11) erstreckt, die an einer, benachbart zur ersten Stirnseite (9) angeordneten zweiten Stirnseite (12) des Gehäuses (4) angeordnet ist und sich über mehrere Pouchzellen (2, 3) hinweg erstreckt; wobei der Zellverbinder (8) über eine Kontaktfläche (13) mit der Wärmesenke (11) verbunden ist.

## Beschreibung

Die Erfindung betrifft ein Batteriemodul, zumindest umfassend eine Mehrzahl von Pouchzellen. Jede Pouchzelle weist ein Gehäuse mit zwei einander gegenüberliegenden größten Seitenflächen auf. Die Pouchzellen sind in dem Batteriemodul mit aufeinanderliegenden Seitenflächen gestapelt angeordnet. Jede Pouchzelle weist mehrere Anoden und Kathoden auf und zwischen den unterschiedlichen Elektroden einen Separator. Die gestapelten Kathoden, Anoden und Elektroden bilden eine flache, aber flächig große Zelle. Die mindestens eine Anode ist mit einem sich aus dem Gehäuse heraus erstreckenden ersten Ableiter und die mindestens eine Kathode mit einem sich aus dem Gehäuse heraus erstreckenden zweiten Ableiter elektrisch leitend verbunden. Die Ableiter werden über Zellverbinder (oder Busbar) verbunden um die Zellen elektrisch in Reihe oder Parallel zu verschalten.

Für den Antrieb von Kraftfahrzeugen werden vermehrt Batterien, insbesondere Lithium-Ionen-Batterien eingesetzt. Batterien werden üblicherweise aus Zellen und/ oder aus mehrere Zellen umfassenden Modulen zusammengesetzt. Die Pouchzellen bestehen aus mindestens einer Anode, einer Kathode und dazwischen angeordnet einem Separator.

Beim Laden und Entladen einer Lithium-Ionen-Batteriezelle wird ein Teil der elektrischen und/oder chemischen Energie in thermische Energie umgesetzt, so dass sich die Batteriezelle erwärmt. Die zur Verbindung von Ableitern unterschiedlicher Zellen eingesetzten Zellverbinder bilden einen Hotspot in den Batteriemodulen mit Pouchzellen, da die Zellverbinder durch beispielsweise Plastikabdeckungen des Batteriemoduls und durch Luft thermisch isoliert angeordnet und in der Regel nicht an eine Kühlung angeschlossen sind. Batteriezellen erreichen dadurch ihre maximale Temperatur in der Regel an diesen Zellverbindern und den Ableitern.

Es ist z. B. bekannt Kühlkanäle hin zu den Zellverbindern zu verlegen oder Heatpipes zur Übertragung von Wärme an den Zellverbindern anzuordnen. Dazu müssen allerdings zusätzliche Bauteile in das Batteriemodul integriert werden, wodurch das Gewicht und Produktionskosten gesteigert werden.

Aus der EP 2 026 387 A1 ist eine Energiespeichereinheit, umfassend eine Mehrzahl von Flachzellen bekannt. Die Ableiter benachbarter Zellen sind über ein Verbindungselement elektrisch leitend miteinander verbunden. Das Verbindungselement ist mit einer fluchtend zu den Zellen und den Ableitern angeordneten Wärmesenke über eine elektrisch isolierende Wärmeleitfolie verbunden.

Aus der US 2006/0269831 A1 ist eine Pouchzelle bekannt, bei der einer der zwei Ableiter der Pouchzelle über ein PTC-Element mit einem elektrischen Anschluss verbunden ist. Dadurch soll eine Überhitzung der Pouchzelle verhindert werden.

Aus der US 2018/0175345 A1 ist ein Batteriemodul mit einer Mehrzahl von Batteriezellen bekannt. Die als Pouchzellen ausgeführten Batteriezellen werden zur Wärmeabführung mit L- oder U-förmigen Kühlplatten kontaktiert.

Aufgabe der vorliegenden Erfindung ist es, die mit Bezug auf den Stand der Technik angeführten Probleme zumindest teilweise zu lösen. Insbesondere soll ein Batteriemodul vorgeschlagen werden, bei der eine kostengünstige und bauraumsparende Maßnahme zur Vermeidung von Hotspots an den Zellverbindern realisiert wird.

Zur Lösung dieser Aufgaben trägt ein Batteriemodul mit den Merkmalen gemäß Patentanspruch 1 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und/oder Details aus den Figuren ergänzt werden, wobei weitere Ausführungsvarianten der Erfindung aufgezeigt werden.

Es wird ein Batteriemodul vorgeschlagen, zumindest umfassend eine Mehrzahl von Pouchzellen. Jede Pouchzelle weist ein Gehäuse mit zwei einander gegenüberliegenden größten Seitenflächen auf. Die Pouchzellen sind in dem Batteriemodul mit aufeinanderliegenden Seitenflächen gestapelt angeordnet. Jede Pouchzelle weist mindestens eine Anode, mindestens eine Kathode und zwischen den unterschiedlichen Elektroden, also zwischen jeder Kathode und jeder Anode, einen Separator auf. Diese Komponenten, also die Elektroden und der Separator sind in dem Gehäuse angeordnet. Die mindestens eine Anode ist mit einem sich aus dem Gehäuse heraus erstreckenden ersten Ableiter und die mindestens eine Kathode mit einem sich aus dem Gehäuse heraus erstreckenden zweiten Ableiter elektrisch leitend verbunden. Zumindest ein Teil der Ableiter von benachbart zueinander angeordneten Pouchzellen sind über einen Zellverbinder elektrisch leitend miteinander verbunden

Der Zellverbinder erstreckt sich ausgehend von, an einer ersten Stirnseite des Gehäuses angeordneten, Verbindungen mit den Ableitern, entlang der ersten Stirnseite hin zu einer Wärmesenke, beispielsweise eine Kühlplatte. Die Wärmesenke ist an einer, benachbart zur ersten Stirnseite angeordneten zweiten Stirnseite des Gehäuses angeordnet und erstreckt sich über mehrere Pouchzellen hinweg. Der Zellverbinder ist über eine Kontaktfläche mit der Wärmesenke verbunden.

Die Pouchzelle umfasst in bekannter Weise insbesondere mindestens eine Anode und mindestens eine Kathode als Elektroden. Zwischen Anode und Kathode ist jeweils ein Separator angeordnet. Die Aktivmaterialien sind insbesondere als Beschichtungen auf elektrisch leitenden Trägermaterialien angeordnet, die als Ableiter dienen. Die Anode und die Kathode werden jeweils auch als Zelllage bezeichnet.

Die Elektroden sind insbesondere in bekannter Weise in einem Gehäuse der Pouchzelle angeordnet und werden von einem Elektrolyten bzw. einer Elektrolytflüssigkeit beaufschlagt.

Insbesondere weist die Pouchzelle eine Vielzahl von Elektroden und Separatoren auf, die aufeinandergestapelt angeordnet sind.

Die Elektroden sind insbesondere folienartig ausgeführt, weisen also eine große Seitenfläche und eine geringe Dicke auf. Auf der Seitenfläche bzw. auf jeder Seitenfläche der Elektrode ist insbesondere eine Beschichtung mit Aktivmaterial angeordnet. Die Separatoren sind jeweils zwischen den Seitenflächen der benachbart angeordneten unterschiedlichen Elektroden angeordnet. Insbesondere erstrecken sich unbeschichtete Teile der Elektroden als Ableiter aus dem Gehäuse heraus.

Insbesondere sind jeweils die Anoden und die Kathoden innerhalb der Batteriezelle miteinander parallelgeschaltet, so dass zumindest eine Mehrzahl von Anoden mit dem ersten Ableiter und eine Mehrzahl von Kathoden mit dem zweiten Ableiter elektrisch leitend verbunden ist.

Insbesondere sind die ersten Ableiter einer ersten Pouchzelle über einen Zellverbinder mit den zweiten Ableitern einer benachbart zu der ersten Pouchzelle angeordneten zweiten Pouchzelle verbunden. Damit kann in bekannter Weise innerhalb des Batteriemoduls eine Reihenschaltung der Pouchzellen realisiert werden.

Die Pouchzellen können aber auch in bekannter Weise in einer Parallelschaltung miteinander angeordnet werden.

Das Gehäuse der Batteriezelle ist insbesondere eine, insbesondere verformbare, Kompositfolie für eine Pouchzelle. Ist das Gehäuse nur plastisch verformbar spricht man von einem Hardcase und bezeichnet die Batteriezelle z. B. als eine prismatische Zelle. Vorliegend ist die Batteriezelle insbesondere eine Pouchzelle. Grundsätzlich kann die vorliegende Erfindung aber auch auf prismatische Zellen übertragen werden.

Die, z. B. als mit Aktivmaterial beschichtete elektrisch leitenden Folien ausgeführten, Anode und Kathode als Elektroden und der Separator sind bekannte Komponenten einer Batteriezelle. Diese können in vorgegebener Reihenfolge gestapelt in der Batteriezelle angeordnet sein. Das Gehäuse ist mit einem, insbesondere flüssigen, Elektrolyt gefüllt.

Die Pouchzelle ist insbesondere eine lithiumhaltige Batteriezelle, insbesondere eine Sekundärzelle.

Jede Pouchzelle weist ein im Wesentlichen quaderförmiges Gehäuse auf, wobei die Pouchzellen in dem Batteriemodul mit aufeinanderliegenden Seitenflächen, die die größten Flächen der Pouchzelle darstellen, gestapelt angeordnet sind. Die übrigen Flächen des quaderförmigen Gehäuses werden als erste Stirnseite und zweite Stirnseite bezeichnet.

Die Wärmesenke, z. B. ein Kühlkanal, der von einer Flüssigkeit durchströmt wird, ist insbesondere an der zweiten Stirnseite angeordnet und erstreckt sich entlang einer Mehrzahl von Pouchzellen und deren zweiten Stirnseiten.

Insbesondere sind die Verbindungen an einem ersten Abschnitt des Zellverbinders und die Kontaktfläche an einem zweiten Abschnitt des Zellverbinders angeordnet. Der zweite Abschnitt erstreckt sich quer zum ersten Abschnitt.

Insbesondere weist der Zellverbinder nur zwei quer zueinander orientierte Flächenelemente auf, wobei an einem ersten Flächenelement der erste Abschnitt und an einem zweiten Flächenelement der zweite Abschnitt angeordnet ist.

Insbesondere ist der Zellverbinder als Blechteil ausgeführt, wobei der zweite Abschnitt gegenüber dem ersten Abschnitt umgeformt angeordnet ist.

Insbesondere sind die Verbindungen an einer gemeinsamen seitlichen Fläche des ersten Abschnitts des Zellverbinders angeordnet. Der Zellverbinder weist am ersten Abschnitt insbesondere eine hin zur ersten Stirnseite der Gehäuse orientierte erste Fläche und eine zur ersten Fläche entgegengesetzt orientierte zweite Fläche auf. Die Verbindungen sind entweder beide auf der ersten Fläche oder auf der zweiten Fläche angeordnet. Die Verbindungen können über eine elektrisch leitende Klebverbindung, eine Lötverbindung, eine Schweißverbindung oder ähnliches gebildet sein. Bevorzugt sind die Verbindungen auf der zweiten Fläche angeordnet.

Insbesondere bilden der Teil der Ableiter einer ersten Pouchzelle eine erste Verbindungsfläche und der Teil der Ableiter einer zweiten Pouchzelle eine zweite Verbindungsfläche mit dem ersten Abschnitt aus. Die Verbindungsflächen erstrecken sich quer zur Kontaktfläche.

Insbesondere ist der erste Abschnitt zwischen den ersten Stirnseiten und den Verbindungen bzw. den Verbindungsflächen angeordnet.

Insbesondere ist der Zellverbinder gegenüber der Wärmesenke elektrisch isoliert.

Insbesondere ist eine elektrisch isolierende Beschichtung oder eine elektrisch isolierende Folie oder eine thermisch leitende (insbesondere aber elektrisch isolierende) Paste zwischen dem Zellverbinder und der Wärmesenke angeordnet.

Die Verwendung unbestimmter Artikel ("ein", "eine", "einer" und "eines"), insbesondere in den Patentansprüchen und der diese wiedergebenden Beschreibung, ist als solche und nicht als Zahlwort zu verstehen. Entsprechend damit eingeführte Begriffe bzw. Komponenten sind somit so zu verstehen, dass diese mindestens einmal vorhanden sind und insbesondere aber auch mehrfach vorhanden sein können.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung. Soweit ein Bauteil mehrfach vorkommen kann ("mindestens ein"), kann die Beschreibung zu einem dieser Bauteile für alle oder ein Teil der Mehrzahl dieser Bauteile gleichermaßen gelten, dies ist aber nicht zwingend.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
- Fig. 1:: ein Batteriemodul in einer perspektivischen Ansicht; und
- Fig. 2:: einen Zellverbinder in einer perspektivischen Ansicht.

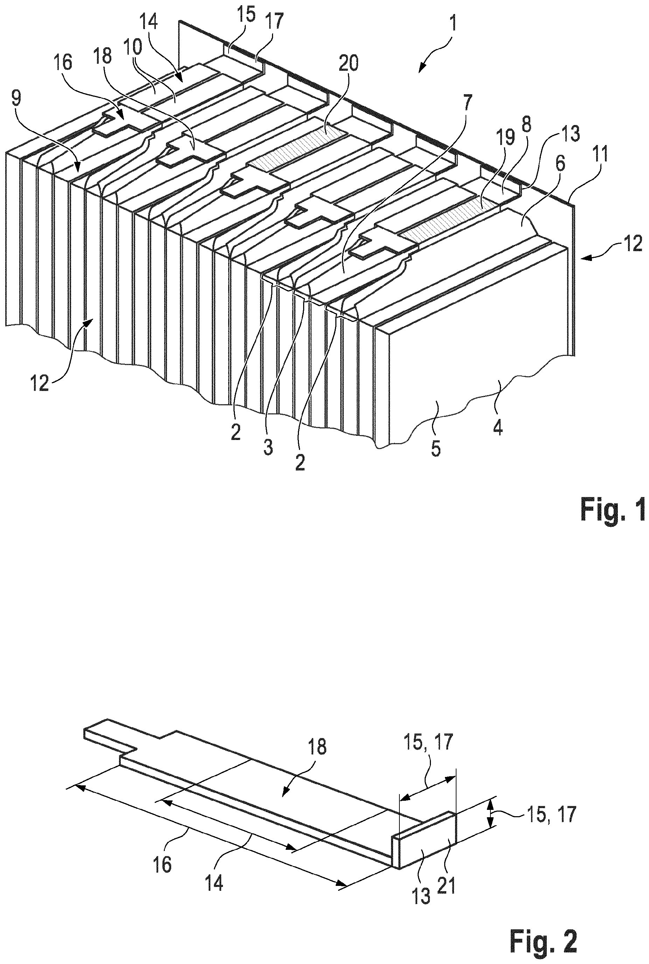

Die Fig. 1 zeigt ein Batteriemodul 1 in einer perspektivischen Ansicht. Fig. 2 zeigt einen, in Fig. 1 eingesetzten, Zellverbinder 8 in einer perspektivischen Ansicht. Die Fig. 1 und 2 werden im Folgenden gemeinsam beschrieben.

Das Batteriemodul 1 umfasst eine Mehrzahl von Pouchzellen 2, 3. Jede Pouchzelle 2, 3 weist ein Gehäuse 4 mit zwei einander gegenüberliegenden größten Seitenflächen 5 auf. Die Pouchzellen 2, 3 sind in dem Batteriemodul 1 mit aufeinanderliegenden Seitenflächen 5 gestapelt angeordnet. Jede Pouchzelle 2, 3 weist vorliegend zwei Anoden, zwei Kathoden und zwischen den unterschiedlichen Elektroden, also zwischen jeder Kathode und jeder Anode, einen Separator auf. Diese Komponenten, also die Elektroden und die Separatoren sind in dem Gehäuse 4 angeordnet (und hier nicht dargestellt). Jede Anode ist mit einem sich aus dem Gehäuse 4 heraus erstreckenden ersten Ableiter 6 und jede Kathode mit einem sich aus dem Gehäuse 4 heraus erstreckenden zweiten Ableiter 7 elektrisch leitend verbunden.

Jede Pouchzelle 2, 3 weist ein im Wesentlichen quaderförmiges Gehäuse 4 auf, wobei die Pouchzellen 2, 3 in dem Batteriemodul 1 mit aufeinanderliegenden Seitenflächen 5, die die größten Flächen der Pouchzelle 2, 3 darstellen, gestapelt angeordnet sind. Die übrigen Flächen des quaderförmigen Gehäuses 4 werden als erste Stirnseite 9 und zweite Stirnseite 12 bezeichnet.

Die Pouchzellen 2, 3 sind hier so ausgeführt, dass an der einen ersten Stirnseite 9 nur die ersten Ableiter 6 und an der gegenüberliegenden ersten Stirnseite 9 nur die zweiten Ableiter 7 angeordnet sind. Die benachbart angeordneten Pouchzellen 2, 3 sind jeweils unterschiedlich orientiert, so dass an nebeneinanderliegenden ersten Stirnseiten 9 benachbarter Pouchzellen 2, 3 erste Ableiter 6 der ersten Pouchzelle 2 über einen Zellverbinder 8 mit zweiten Ableitern 7 der zweiten Pouchzelle 3 verbunden sind.

Es sind also die ersten Ableiter 6 einer ersten Pouchzelle 2 über einen Zellverbinder 8 mit den zweiten Ableitern 7 einer benachbart zu der ersten Pouchzelle 2 angeordneten zweiten Pouchzelle 3 verbunden. Damit kann in bekannter Weise innerhalb des Batteriemoduls 1 eine Reihenschaltung der Pouchzellen 2, 3 realisiert werden.

An jeder Pouchzelle 2, 3 sind die Ableiter 6, 7 außerhalb des Gehäuses zu jeweils einem gemeinsamen Zellverbinder 8 zusammengeführt. Damit sind jeweils die Anoden und die Kathoden jeder einzelnen Pouchzelle 2, 3 miteinander parallelgeschaltet, so dass zumindest eine Mehrzahl von Anoden mit dem ersten Ableiter 6 und eine Mehrzahl von Kathoden mit dem zweiten Ableiter 7 elektrisch leitend verbunden sind.

Der Zellverbinder 8 erstreckt sich ausgehend von, an einer ersten Stirnseite 9 der Gehäuse 4 angeordneten, Verbindungen 10 mit den Ableitern 6, 7 entlang der ersten Stirnseite 9 hin zu einer Wärmesenke 11. Die Wärmesenke 11 ist an einer, benachbart zur ersten Stirnseite 9 angeordneten zweiten Stirnseite 12 des Gehäuses 4 angeordnet und erstreckt sich über mehrere Pouchzellen 2, 3 hinweg. Der Zellverbinder 8 ist über eine Kontaktfläche 13 mit der Wärmesenke 11 verbunden.

Die Wärmesenke 11 ist hier ein Kühlkanal, der von einer Flüssigkeit durchströmt wird.

Die Verbindungen 10 sind an einem ersten Abschnitt 14 des Zellverbinders 8 und die Kontaktfläche 13 an einem zweiten Abschnitt 15 des Zellverbinders 8 angeordnet. Der zweite Abschnitt 15 erstreckt sich quer bzw. senkrecht zum ersten Abschnitt 14.

Der Zellverbinder 8 weist nur zwei quer zueinander orientierte Flächenelemente 16, 17 auf, wobei an einem ersten Flächenelement 16 der erste Abschnitt 14 und an einem zweiten Flächenelement 17 der zweite Abschnitt 15 angeordnet ist.

Der Zellverbinder 8 ist als Blechteil ausgeführt, wobei der zweite Abschnitt 15 gegenüber dem ersten Abschnitt 14 umgeformt angeordnet ist.

Die Verbindungen 10 sind an einer gemeinsamen seitlichen Fläche 18 des ersten Abschnitts 14 des Zellverbinders 8 angeordnet. Der Zellverbinder 8 weist am ersten Abschnitt 14 eine hin zur ersten Stirnseite 9 der Gehäuse 4 orientierte erste Fläche und eine zur erste Fläche entgegengesetzt orientierte bzw. gegenüberliegend angeordnete zweite Fläche auf. Die Verbindungen 10 sind entweder beide auf der ersten Fläche oder auf der zweiten Fläche angeordnet. Die Verbindungen 10 können über eine elektrisch leitende Klebverbindung, eine Lötverbindung, eine Schweißverbindung oder ähnliches gebildet sein. Bevorzugt sind die Verbindungen 10 auf der zweiten Fläche, hier als seitliche Fläche 18 dargestellt, angeordnet.

Der erste Ableiter 6 einer ersten Pouchzelle 2 bildet eine erste Verbindungsfläche 19 und der zweite Ableiter 7 einer zweiten Pouchzelle 3 eine zweite Verbindungsfläche 20 mit dem ersten Abschnitt 14 aus. Die Verbindungsflächen 19, 20 erstrecken sich quer zur Kontaktfläche 13.

Der erste Abschnitt 14 ist zwischen den ersten Stirnseiten 9 und den Verbindungen 10 bzw. den Verbindungsflächen 19, 20 angeordnet.

Der Zellverbinder 8 ist gegenüber der Wärmesenke 11 elektrisch isoliert. Dafür ist eine elektrisch isolierende Folie 21 oder eine thermisch leitende Paste zwischen dem Zellverbinder 8 und der Wärmesenke 11 angeordnet.

### Bezugszeichenliste

- 1: Batteriemodul
- 2: erste Pouchzelle
- 3: zweite Pouchzelle
- 4: Gehäuse
- 5: Seitenfläche
- 6: erster Ableiter
- 7: zweiter Ableiter
- 8: Zellverbinder
- 9: erste Stirnseite
- 10: Verbindung
- 11: Wärmesenke
- 12: zweite Stirnseite
- 13: Kontaktfläche
- 14: erster Abschnitt
- 15: zweiter Abschnitt
- 16: erstes Flächenelement
- 17: zweites Flächenelement
- 18: Fläche
- 19: erste Verbindungsfläche
- 20: zweite Verbindungsfläche
- 21: Folie

## Patentansprüche

1. Batteriemodul (1), zumindest umfassend eine Mehrzahl von Pouchzellen (2, 3), wobei jede Pouchzelle (2, 3) ein Gehäuse (4) mit zwei einander gegenüberliegenden größten Seitenflächen (5) aufweist; wobei die Pouchzellen (2, 3) in dem Batteriemodul (1) mit aufeinanderliegenden Seitenflächen (5) gestapelt angeordnet sind; wobei jede Pouchzelle (2, 3) mindestens eine Anode, mindestens eine Kathode und zwischen den unterschiedlichen Elektroden einen Separator aufweist, die innerhalb des Gehäuses (4) angeordnet sind; wobei die mindestens eine Anode mit einem sich aus dem Gehäuse (4) heraus erstreckenden ersten Ableiter (6) und die mindestens eine Kathode mit einem sich aus dem Gehäuse (4) heraus erstreckenden zweiten Ableiter (7) elektrisch leitend verbunden ist; wobei zumindest ein Teil der Ableiter (6, 7) von benachbart zueinander angeordneten Pouchzellen (2, 3) über einen Zellverbinder (8) elektrisch leitend miteinander verbunden sind; wobei sich der Zellverbinder (8) ausgehend von, an einer ersten Stirnseite (9) des Gehäuses (4) angeordneten, Verbindungen (10) mit den Ableitern (6, 7), entlang der ersten Stirnseite (9) hin zu einer Wärmesenke (11) erstreckt, die an einer, benachbart zur ersten Stirnseite (9) angeordneten zweiten Stirnseite (12) des Gehäuses (4) angeordnet ist und sich über mehrere Pouchzellen (2, 3) hinweg erstreckt; wobei der Zellverbinder (8) über eine Kontaktfläche (13) mit der Wärmesenke (11) verbunden ist.

2. Batteriemodul (1) nach Patentanspruch 1, wobei die Verbindungen (10) an einem ersten Abschnitt (14) des Zellverbinders (8) und die Kontaktfläche (13) an einem zweiten Abschnitt (15) des Zellverbinders (8) angeordnet ist; wobei sich der zweite Abschnitt (15) quer zum ersten Abschnitt (14) erstreckt.

3. Batteriemodul (1) nach Patentanspruch 2, wobei der Zellverbinder (8) nur zwei quer zueinander orientierte Flächenelemente (16, 17) aufweist, wobei an einem ersten Flächenelement (16) der erste Abschnitt (14) und an einem zweiten Flächenelement (17) der zweite Abschnitt (15) angeordnet ist.

4. Batteriemodul (1) nach einem der vorhergehenden Patentansprüche 2 und 3, wobei die Verbindungen (10) an einer gemeinsamen seitlichen Fläche (18) des Zellverbinders (8) angeordnet sind.

5. Batteriemodul (1) nach einem der vorhergehenden Patentansprüche 2 bis 4, wobei der Teil der Ableiter (6, 7) einer ersten Pouchzelle (2) eine erste Verbindungsfläche (19) und der Teil der Ableiter (6, 7) einer zweiten Pouchzelle (3) eine zweite Verbindungsfläche (20) mit dem ersten Abschnitt (14) ausbilden; wobei sich die Verbindungsflächen (19, 20) quer zur Kontaktfläche (13) erstrecken.

6. Batteriemodul (1) nach einem der vorhergehenden Patentansprüche 2 bis 5, wobei der erste Abschnitt (14) zwischen den ersten Stirnseiten (9) und den Verbindungen (10) angeordnet ist.

7. Batteriemodul (1) nach einem der vorhergehenden Patentansprüche, wobei der Zellverbinder (8) gegenüber der Wärmesenke (11) elektrisch isoliert ist.

8. Batteriemodul (1) nach Patentanspruch 7, wobei eine elektrisch isolierende Beschichtung oder Folie (21) zwischen dem Zellverbinder (8) und der Wärmesenke (11) angeordnet ist.
